# EUROPEAN PATENT SPECIFICATION

(11) **EP 4 349 657 B1**
(45) Date of publication and mention of the grant of the patent: **20.08.2025**
(21) Application number: 23201516.4
(22) Date of filing: 04.10.2023
(51) Int. Cl.: B60R 11/04

(54) **TRUCK COMPRISING A CAMERA HOUSING THAT ENCLOSES A CAMERA MODULE**
LASTKRAFTWAGEN MIT EINEM KAMERAGEHÄUSE, DAS EIN KAMERAMODUL UMSCHLIESST
CAMION COMPRENANT UN BOÎTIER DE CAMÉRA QUI RENFERME UN MODULE DE CAMÉRA

(30) Priority: 06.10.2022 NL 2033251
(43) Date of publication of application: 10.04.2024
(73) Proprietor: DAF Trucks N.V., 5643 TW Eindhoven (NL)
(72) Inventor: PURDY, Stuart William, 5643 TW EINDHOVEN (NL); VAN LOTRINGEN, Bartholomeus Paulus, 5643 TW EINDHOVEN (NL)
(74) Representative: V.O.

(56) References cited:
- DE-A1- 102012 204 192
- DE-A1- 102019 209 996
- US-A1- 2002 113 875
- US-A1- 2015 097 013
- US-A1- 2022 105 878

## Description

The invention relates to a truck, comprising a camera housing that encloses a camera module for capturing images of an object detection area in front of the truck. The camera housing is fixated to a fixation area on a cabin interior facing side of a windscreen of the truck.

To comply with legislation, vehicles such as heavy and medium duty trucks can be equipped with an Advanced Driver Assistance System (ADAS). An ADAS may include a Moving Off Information System (MOIS) to alert the driver that vulnerable road users are located in front of the vehicle or approaching the path of the vehicle, as the vehicle is departing from stand-still.

In order to detect such road users, and other objects, the vehicle can comprise a windscreen mounted camera to capture images in front of the vehicle. The field of view of such a windscreen mounted camera may at least partially overlap with the driver's field of view while operating the vehicle, so that the images captured by the camera can be used to assist the driver. For example, the captured images can be processed further downstream by a system, which ultimately informs the driver that a detected road user or object is present in the object detection area. Such a camera and related cabling is to be reliably mounted and covered, to prevent damage during operating conditions, e.g. when the vehicle is driven across different types of road surfaces. For this reason, placement of the camera is typically near an edge of the windscreen, adjacent to a frame panel of the vehicle, to structurally support the camera mount and to minimalize cabling lengths.

Low placement of the camera on the windscreen would block direct vision to areas which may be considered important for drivability as well as the safety rating of the vehicle. Therefore, a more conventional placement of the camera is as high up on the windscreen as possible, to maximize the driver's view on road conditions and traffic. For example, DE102019209996 describes a mounting base for mounting a rear view mirror and other components right below the roof panel to the windscreen.

Trucks, however, typically have a windscreen that is located relatively high above the road surface, e.g. spanning distances larger than 3 meters. As such, a conventional camera placement near the upper edge of the windscreen may not be optimal for detecting road users and other objects down below.

It is an object of the present invention to provide a camera housing for optimally positioning a camera module on a windscreen of a truck, while forming a minimal obstruction in the truck driver's field of view.

### SUMMARY

In summary, the invention pertains to a truck as defined in the appended claims. The truck comprises a camera housing that encloses a camera module. The camera housing is fixated to a fixation area on a cabin interior facing side of a windscreen of the truck. The camera housing comprises a mount section and a bridge section. The mount section is arranged for mounting the camera module to the windscreen at a mounting distance from a roof panel of the truck, for capturing images of an object detection area in front of the truck. The bridge section extends from the mount section towards the roof panel of the truck and spans the mounting distance adjacently along the fixation area. The bridge section comprises one or more channels that extend between the camera module and the roof panel, for protectively guiding cables therebetween. The bridge section comprises a clearance that exposes at least part of the fixation area between the camera module and the roof panel. The camera module comprises a number of camera devices, such as a normal camera, a wide angle camera and/or a tele lens camera, wherein each camera device of the number of camera devices comprises a connector for connecting to a cable, wherein the bridge section comprises a number of channels equal to the number of camera devices, and wherein each channel of the number of channels is arranged for protectively guiding a cable between a respective connector and the roof panel. As a result, each cable is separately guided and protected between the individual camera devices of the camera module and the roof panel, while the obstruction in the truck driver's field of view is minimized.

Accordingly, the camera housing provides an enclosure for a windscreen mounted camera module at a mounting distance below the roof panel that provides an optimal mounting position for the camera module, e.g. relative to the object detection area. The camera housing reliably guides and protects cables between the camera module and the roof panel, while forming a minimal obstruction in the truck driver's field of view.

Preferably, the exposed part of the fixation area connects with a line of sight of a driver of the truck. As such, the driver is able to see through the clearance, e.g. to look at traffic lights or road signs. By minimizing the area of the bridge section that covers the fixation area, the obstruction of the truck driver's field of view is further limited.

In some embodiments, the bridge section comprises two branches that extend in parallel between the camera module and the roof panel, wherein each branch comprises a channel, and wherein the clearance is provided between the two branches. Accordingly, the bridge section e.g. forms part of a window frame that surrounds the clearance. For example, a window frame can be formed by opposing edges of the two branches, an edge of the roof panel, and an edge of the mount section.

To further reduce the obstruction in the driver's field of view, the bridge section can comprise a circumferential side that surrounds the clearance, wherein the circumferential side tapers outward from the fixation area. In this way, the thickness of the camera housing does not limit the effect of the clearance, because the outwardly tapered circumferential side allows lines of sight through the clearance at relatively large angular offsets with respect to the normal of the exposed part of the fixation area.

In other or further embodiments, each channel of the one or more channels comprises an inner wall structure with a minimum radius. For example, the minimum radius can be between 20 and 50 millimeter. In this way, the bending radius of the cables guided through the channels can be limited, e.g. to prevent damage to the cables, which may be vulnerable, and/or to prevent loss of power or signal quality of the camera module.

In yet other or further embodiments, the mount section is arranged for mounting the camera module at a maximum height above a road surface. For example, the maximum height above the road surface is between 2 and 4 meters, e.g. around 3 meters above the road surface. As a result, the mounted camera module is placed in a position to capture images of road users or objects in the object detection area, e.g. for processing by an ADAS, while being able to see underneath roof panel mounted elements, such as a sun visor.

The truck may for example comprise sun visors mounted on a cabin exterior facing side of the truck, wherein the sun visors extend from the roof panel along a forward driving direction of the truck for protecting truck occupants' eyes from bright sunlight, and wherein the camera mount is arranged for mounting the camera module at a minimum distance below the sun visors. In this way, the mounted camera is able to see underneath the sun visors.

In some embodiments, the camera module is part of an Advanced Driver Assistance System (ADAS) of the truck.

### BRIEF DESCRIPTION OF THE DRAWINGS

The invention will be further elucidated in the figures:
FIG 1 illustrates an embodiment of a truck comprising a camera housing;
FIGs 2A and 2B provide a detailed view of a camera housing as described herein;
FIG 3 illustrates an isometric view of a camera housing as described herein;
FIG 4 illustrates another or further embodiment of a truck comprising a camera housing, wherein the truck is equipped with sun visors.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

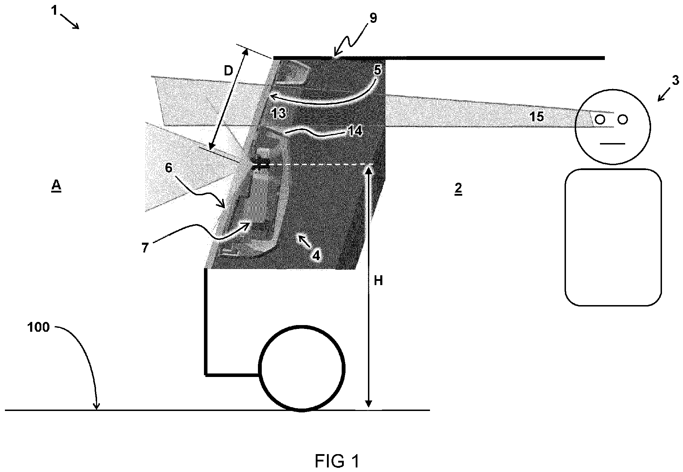

FIG 1 illustrates a truck 1, or heavy goods vehicle, specifically a cabin 2 thereof. The truck 1 can be any size or purpose, e.g. a box truck or a tractor of a tractor-trailer combination. A driver 3 in control of driving or operating the truck 1 is seated inside the cabin 2.

A camera housing 4 is mounted inside the cabin 2 of the truck 1. The camera housing 4 is fixated to a fixation area 5 on a cabin interior facing side of a windscreen 6 of the truck 1. The camera housing 4 encloses a camera module 7, e.g. by means of a base plate fixated to the fixation area 5, and a cover attached to the base plate and arranged for covering the camera module 7.

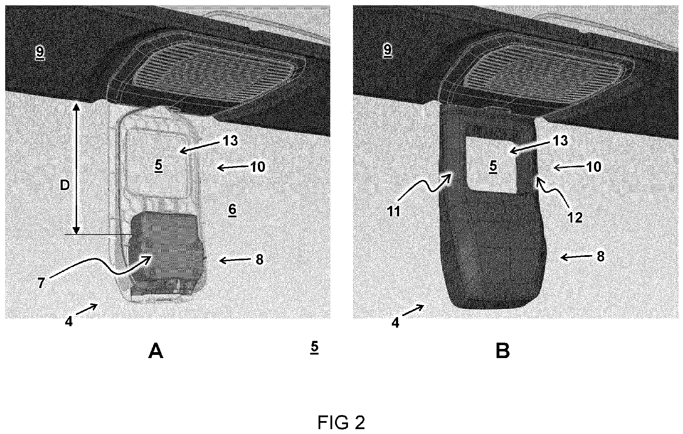

As illustrated in FIG 2A and B, the camera housing 4 comprises a mount section 8 arranged for mounting the camera module 7 to the windscreen 6 at a mounting distance D from a roof panel 9 of the truck. The camera module 7 is mounted in a position and orientation suitable for capturing images of an object detection area A in front of the truck 1, as illustrated in FIG 1. The object detection area A can e.g. encompass road users or objects in an area or volume in front of the truck 1 that is not easily visible by the driver 3 of the truck 1, for example because it is directly adjacent to the front side of the truck 1 and therefore outside a field of view of the driver 3. Optionally, the camera module 7 can e.g. be part of an advanced driver assistance system (ADAS) of the truck 1, such as a Moving Off Information System (MOIS). Accordingly, when the driver 3 is attempting to launch the truck 1 from standstill while a road user or object is present in the object detection area A, the ADAS or MOIS can detect such a road user or object, e.g. based on images captured by the camera module 7, and the ADAS or MOIS can send out an alert signal to the driver 3.

By having the camera module 7 mounted at a mounting distance from the roof panel 9, e.g. instead of directly adjacent to an edge of the windscreen 6, the height of the camera module 7 with respect to the object detection area A can be optimized, e.g. so that the field of view of the camera module 7 complements the field of view of the driver 3. For example, it may be preferable to mount the camera module 7 at least partially within the field of view of the driver 3, so that the field of view of the camera device(s) of the camera module 7 at least partially overlaps with the field of view of the driver 3. This may impose limits to the positioning of the camera module 7 relative to the windscreen 6, the roof panel 9, and/or other features. For example, the camera module 7 can be mounted at a maximum height H above the road surface 100 that supports the truck 1. In other words, as the truck 1 is standing still or driving on the road surface 100, the camera module 7 can be provided at a maximum height H with respect to the road surface 100. Accordingly, the mounting position of the camera module 7 with respect to the road surface 100, and/or the object detection area A, can be optimized to take into account desired image capturing properties of the camera module 7, such as focal length, depth of focus, angle of view, magnification, etc.

As illustrated in FIG 2, the camera housing 4 further includes a bridge section 10 that extends from the mount section 8 towards the roof panel 9 and that spans the mounting distance D adjacently along the fixation area 5. The bridge section 10 comprises two channels 11, 12 that extend between the camera module 7 and the roof panel 9. Alternatively, the bridge section 10 can comprise one channel, or more than two channels. Each channel is arranged for protectively guiding cables, such as power or data cables, between the camera module 7 and the roof panel 9. For example, the camera module 7 can be provided with one or more connectors for connecting to an equal number of cables. Alternatively, one or more cables can be an integral part of the camera module 7, and can extend from the camera module 7 towards the roof panel 9, via the channels. The roof panel 9 can for example be arranged for guiding the cables to a power supply, an image processor, a controller, a signal transmitter or receiver, a converter, and/or other components of the truck, such as an ADAS.

Both FIG 1 as well as FIGs 2A and B further illustrate that the bridge section 10 comprises a clearance 13 that exposes at least part of the fixation area 5 between the camera module 7 and the roof panel 9. In this way, the visual obstruction in the windscreen 6 formed by the camera housing 4, in particular by the bridge section 10, is reduced, and the clearance 13 provides the driver 3 with direct vision of the truck's surroundings through the exposed part of the fixation area 5. The bridge section 10 can additionally comprise a circumferential side 14 that surrounds the clearance 13, wherein the circumferential side 14 tapers outward from the fixation area 5, e.g. at an outward angle relative to the normal of the fixation area 5. In this way, the visual obstruction formed by the camera housing 4 can be further minimized.

As shown in FIG 1, the exposed part of the fixation area 5 can for example connect with a line of sight 15 of the driver 3 of the truck 1. In other words, via the clearance 13 in the bridge section 10 the driver 3 is able to look through the windscreen 6 and see e.g. other vehicles, road users, road signs, and/or traffic lights outside the truck 1.

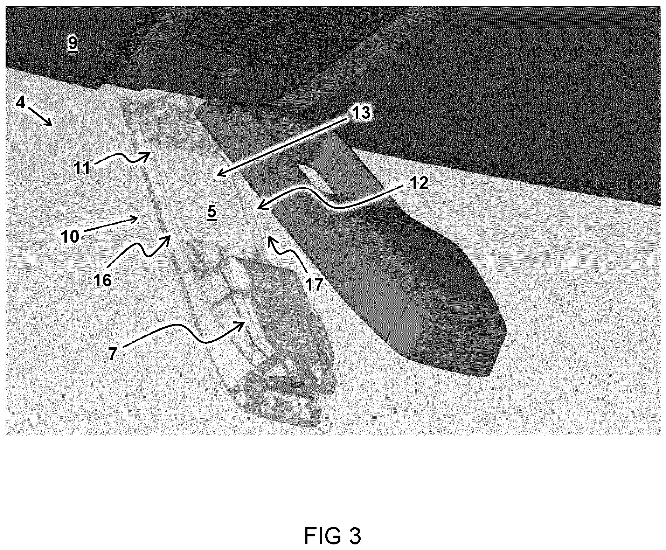

FIG 1 also illustrates that the camera module 7 can e.g. comprise two camera devices, e.g. a normal camera device and a wide angle camera device. Alternatively, the camera module 7 can comprise one camera device, or more than two camera devices. Each camera device may comprise one or more connectors for connecting to cables, such as power cables and/or a data cables, e.g. as shown in FIG 2A and in FIG 3.

The bridge section 10 preferably comprises a number of channels equal to the number of camera devices. In FIG 3, the bridge section 10 comprises two branches 16, 17. The two branches 16, 17 extend in parallel between the camera module 7 and the roof panel 9. For example, as illustrated in FIG 3, one of the two branches extends along a first side of the camera housing 4, and the other branch extends along a second side of the camera housing 4 opposite the first side. Alternatively, the branches can extend at different relative angles or orientations between the camera module 7 and the roof panel 9. The branches may also follow a non-straight trajectory, e.g. by being curved or profiled.

As illustrated, each branch 16, 17 comprises a channel 11, 12, for protectively guiding cables therethrough. Preferably, the clearance 13 is provided between the two branches 16, 17, so that each cable is protectively guided around the exposed part of the fixation area 5, between a respective connector and the roof panel 9.

Each channel 16, 17 may comprise an inner wall structure with a minimum radius, e.g. to prevent damage to the cables due to bending stresses when mounted in the channels 16, 17. As such, the minimum radius of the inner wall structure is dependent on the diameter or thickness of the cables, and/or its material properties. For example, for a coax cable with a diameter of 3 millimeter, the minimum radius of the inner wall structure can be between 20 and 50 millimeters.

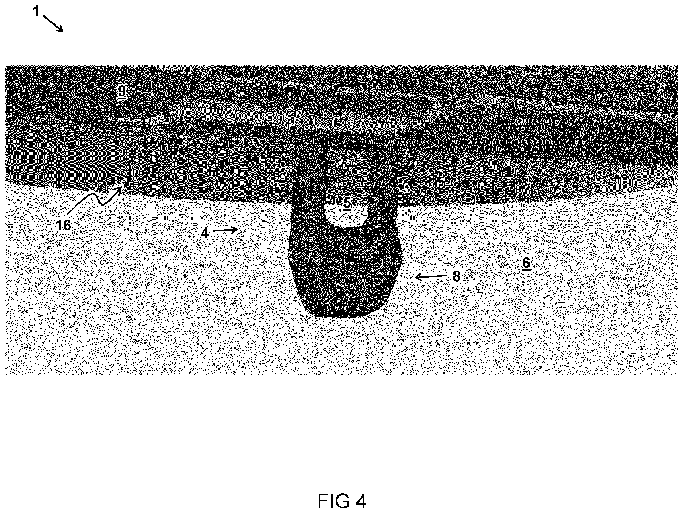

FIG 4 illustrates another or further embodiment of a truck 1 as described herein. The truck 1 comprises sun visors 18 mounted on a cabin exterior facing side of the truck. The sun visors extend from the roof panel 9 along a forward driving direction of the truck for protecting truck occupants' eyes, such as the driver's eyes, from bright sunlight. The camera mount 8 is arranged for mounting the camera module on the windscreen 6 at a minimum distance below the sun visors 18. In this way, the camera module is able to see underneath the sun visors 18 to visualize the truck's surroundings. Also, in this configuration, the driver's eyes are protected from sunlight by the sun visors 18 while a line of sight of the surroundings is provided through the exposed part of the fixation area 5.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck (1), comprising a camera housing (4) that encloses a camera module (7), wherein the camera housing (4) is fixated to a fixation area (5) on a cabin interior facing side of a windscreen (6) of the truck (1), the camera housing (4) comprising:
- a mount section (8), arranged for mounting the camera module (7) to the windscreen (6) at a mounting distance (D) from a roof panel (9) of the truck, for capturing images of an object detection area (A) in front of the truck;
- a bridge section (10), extending from the mount section (8) towards the roof panel (9) and spanning the mounting distance (D) adjacently along the fixation area (5);
wherein the bridge section (10) comprises one or more channels (11, 12) that extend between the camera module (7) and the roof panel (9), for protectively guiding cables therebetween;
wherein the bridge section (10) comprises a clearance (13) that exposes at least part of the fixation area (5) between the camera module (7) and the roof panel (9);
**characterized in that** the camera module (7) comprises a number of camera devices, wherein each camera device of the number of camera devices comprises a connector for connecting to a cable, wherein the bridge section (10) comprises a number of channels (11, 12) equal to the number of camera devices, and wherein each channel (11, 12) of the number of channels is arranged for protectively guiding a cable between a respective connector and the roof panel (9).

2. Truck (1) according to claim 1, wherein the exposed part of the fixation area (5) connects with a line of sight (15) of a driver (3) of the truck.

3. Truck (1) according to any preceding claim, wherein the bridge section (10) comprises two branches (16, 17) extending in parallel between the camera module (7) and the roof panel (9), wherein each branch (16, 17) comprises a channel (11, 12), and wherein the clearance (13) is provided between the two branches (16, 17).

4. Truck (1) according to any preceding claim, wherein the bridge section (10) comprises a circumferential side (14) that surrounds the clearance (13), wherein the circumferential side (14) tapers outward from the fixation area (5).

5. Truck (1) according to any preceding claim, wherein each channel (11, 12) of the one or more channels comprises an inner wall structure with a minimum radius.

6. Truck (1) according to any preceding claim, wherein the mount section (8) is arranged for mounting the camera module (7) at a maximum height (H) above a road surface (100).

7. Truck (1) according to any preceding claim, wherein the truck comprises sun visors (18) mounted on a cabin exterior facing side of the truck, wherein the sun visors (18) extend from the roof panel (9) along a forward driving direction of the truck for protecting truck occupants' eyes from bright sunlight, and wherein the camera mount (8) is arranged for mounting the camera module at a minimum distance below the sun visors (18).

8. Truck (1) according to any preceding claim, wherein the camera module (7) is part of an advanced driver assistance system (ADAS) of the truck.

## Patentansprüche

1. Lastkraftwagen (1), der ein Kameragehäuse (4) umfasst, das ein Kameramodul (7) umschließt, wobei das Kameragehäuse (4) an einem Befestigungsbereich (5) auf einer dem Kabineninneren zugewandten Seite einer Windschutzscheibe (6) des Lastkraftwagens (1) befestigt ist, wobei das Kameragehäuse (4) umfasst:
- einen Montageabschnitt (8), der zur Montage des Kameramoduls (7) an der Windschutzscheibe (6) in einem Montageabstand (D) von einer Dachplatte (9) des Lastkraftwagens angeordnet ist, um Bilder eines Objekterfassungsbereichs (A) vor dem Lastkraftwagen zu erfassen;
- einen Brückenabschnitt (10), der sich von dem Montageabschnitt (8) in Richtung der Dachplatte (9) erstreckt und den Montageabstand (D) benachbart entlang des Befestigungsbereichs (5) überspannt;
wobei der Brückenabschnitt (10) einen oder mehrere Kanäle (11, 12) umfasst, die sich zwischen dem Kameramodul (7) und der Dachplatte (9) erstrecken, um Kabel dazwischen schützend zu führen;
wobei der Brückenabschnitt (10) einen Freiraum (13) umfasst, der zumindest einen Teil des Befestigungsbereichs (5) zwischen dem Kameramodul (7) und der Dachplatte (9) freigibt;
**dadurch gekennzeichnet, dass** das Kameramodul (7) eine Anzahl von Kameravorrichtungen umfasst, wobei jede Kameravorrichtung der Anzahl von Kameravorrichtungen einen Verbinder zum Anschluss an ein Kabel umfasst, wobei der Brückenabschnitt (10) eine Anzahl von Kanälen (11, 12) umfasst, die der Anzahl der Kameravorrichtungen entspricht, und wobei jeder Kanal (11, 12) der Anzahl von Kanälen zum schützenden Führen eines Kabels zwischen einem jeweiligen Verbinder und der Dachplatte (9) angeordnet ist.

2. Lastkraftwagen (1) nach Anspruch 1, wobei der freiliegende Teil des Befestigungsbereichs (5) mit einer Sichtlinie (15) eines Fahrers (3) des Lastkraftwagens verbunden ist.

3. Lastkraftwagen (1) nach einem der vorhergehenden Ansprüche, wobei der Brückenabschnitt (10) zwei Abzweigungen (16, 17) umfasst, die sich parallel zwischen dem Kameramodul (7) und der Dachplatte (9) erstrecken, wobei jede Abzweigung (16, 17) einen Kanal (11, 12) umfasst, und wobei der Freiraum (13) zwischen den beiden Abzweigungen (16, 17) vorgesehen ist.

4. Lastkraftwagen (1) nach einem der vorhergehenden Ansprüche, wobei der Brückenabschnitt (10) eine Umfangsseite (14) umfasst, die den Freiraum (13) umgibt, wobei sich die Umfangsseite (14) von dem Befestigungsbereich (5) nach außen verjüngt.

5. Lastkraftwagen (1) nach einem der vorhergehenden Ansprüche, wobei jeder Kanal (11, 12) des einen oder der mehreren Kanäle eine Innenwandstruktur mit einem Mindestradius umfasst.

6. Lastkraftwagen (1) nach einem der vorhergehenden Ansprüche, wobei der Montageabschnitt (8) zur Montage des Kameramoduls (7) in einer maximalen Höhe (H) über einer Straßenoberfläche (100) angeordnet ist.

7. Lastkraftwagen (1) nach einem der vorhergehenden Ansprüche, wobei der Lastkraftwagen Sonnenblenden (18) umfasst, die an einer der Kabinenaußenseite des Lastkraftwagens montiert sind, wobei sich die Sonnenblenden (18) von der Dachplatte (9) entlang einer Vorwärtsfahrtrichtung des Lastkraftwagens erstrecken, um die Augen der Lastkraftwageninsassen vor hellem Sonnenlicht zu schützen, und wobei die Kamerahalterung (8) zur Montage des Kameramoduls in einem Mindestabstand unterhalb der Sonnenblenden (18) angeordnet ist.

8. Lastkraftwagen (1) nach einem der vorhergehenden Ansprüche, wobei das Kameramodul (7) Teil eines Fahrerassistenzsystems (FAS) des Lastkraftwagens ist.

## Revendications

1. Camion (1), comprenant un boîtier de caméra (4) qui renferme un module de caméra (7), dans lequel le boîtier de caméra (4) est fixé à une zone de fixation (5) sur un côté faisant face à l'intérieur de la cabine d'un pare-brise (6) du camion (1), le boîtier de caméra (4) comprenant :
- une section de montage (8), agencée pour monter le module de caméra (7) sur le pare-brise (6) à une distance de montage (D) d'un panneau de toit (9) du camion, pour capturer des images d'une zone de détection d'objet (A) en avant du camion ;
- une section de pont (10), s'étendant de la section de montage (8) vers le panneau de toit (9) et couvrant la distance de montage (D) de manière adjacente le long de la zone de fixation (5) ;
dans lequel la section de pont (10) comprend un ou plusieurs canaux (11, 12) qui s'étendent entre le module de caméra (7) et le panneau de toit (9), pour guider de manière protectrice des câbles entre ceux-ci ;
dans lequel la section de pont (10) comprend un espace libre (13) qui expose au moins une partie de la zone de fixation (5) entre le module de caméra (7) et le panneau de toit (9) ;
**caractérisé en ce que** le module de caméra (7) comprend un certain nombre de dispositifs de caméra, dans lequel chaque dispositif de caméra du certain nombre de dispositifs de caméra comprend un connecteur pour une connexion à un câble, dans lequel la section de pont (10) comprend un certain nombre de canaux (11, 12) égal au nombre de dispositifs de caméra, et dans lequel chaque canal (11, 12) du nombre de canaux est agencé pour guider de manière protectrice un câble entre un connecteur respectif et le panneau de toit (9).

2. Camion (1) selon la revendication 1, dans lequel la partie exposée de la zone de fixation (5) se connecte à une ligne de visée (15) d'un conducteur (3) du camion.

3. Camion (1) selon l'une quelconque des revendications précédentes, dans lequel la section de pont (10) comprend deux branches (16, 17) s'étendant en parallèle entre le module de caméra (7) et le panneau de toit (9), dans lequel chaque branche (16, 17) comprend un canal (11, 12), et dans lequel l'espace libre (13) est prévu entre les deux branches (16, 17).

4. Camion (1) selon l'une quelconque des revendications précédentes, dans lequel la section de pont (10) comprend un côté circonférentiel (14) qui entoure l'espace libre (13), dans lequel le côté circonférentiel (14) est effilé vers l'extérieur à partir de la zone de fixation (5).

5. Camion (1) selon l'une quelconque des revendications précédentes, dans lequel chaque canal (11, 12) des un ou plusieurs canaux comprend une structure de paroi intérieure avec un rayon minimum.

6. Camion (1) selon l'une quelconque des revendications précédentes, dans lequel la section de montage (8) est agencée pour monter le module de caméra (7) à une hauteur maximale (H) au-dessus d'une surface de route (100).

7. Camion (1) selon l'une quelconque des revendications précédentes, dans lequel le camion comprend des pare-soleil (18) montés sur un côté faisant face à l'extérieur de la cabine du camion, dans lequel les pare-soleils (18) s'étendent à partir du panneau de toit (9) le long d'une direction de conduite vers l'avant du camion pour protéger les yeux des occupants du camion de la lumière éclatante du soleil, et dans lequel le support de caméra (8) est agencé pour monter le module de caméra à une distance minimale en dessous des pare-soleil (18).

8. Camion (1) selon l'une quelconque des revendications précédentes, dans lequel le module de caméra (7) fait partie d'un système avancé d'aide à la conduite (ADAS) du camion.
